# EUROPEAN PATENT APPLICATION

(11) **EP 3 567 063 A1**
(43) Date of publication of application: **13.11.2019**
(21) Application number: 18171224.1
(22) Date of filing: 08.05.2018
(51) Int. Cl.: C08G 18/50, C08G 18/38, C08G 18/40, C08G 18/46, C08K 3/016

(54) **FLAME-RETARDANT MODELLING BOARD**

(71) Applicant: RAMPF Holding GmbH & Co. KG, 72661 Grafenberg (DE)
(72) Inventor: MÜLLER, Dr. Alexander, 73730 Esslingen (DE); EGE, Alexander, 72685 Bempflingen (DE); VOHRER, Marcus, 72805 Lichtenstein (DE); PUST, Sissi, 72585 Riederich (DE)
(74) Representative: Weickmann & Weickmann PartmbB

(57) **Abstract**

The present invention relates to a reactive polyurethane-system comprising at least one polyol (A), at least one polyisocyanate (B), at least one flame retardant (FR) component and at least one phosphorous based polyol (P), a polyurethane product made thereof and its use, particularly as a modelling board.

## Description

The present invention relates to a reactive polyurethane-system comprising at least one polyol (A), at least one polyisocyanate (B), at least one flame retardant (FR) component and at least one phosphorous based polyol (P), a polyurethane made thereof and its use, particularly as a modelling board.

Modelling boards are designed and formulated to meet the wide scope of proofing, modelling, styling, prototyping and fabricating applications found throughout industry today. They are required to have a wide range of performance characteristics tailor-made for the various applications. However, they all share a number of performance characteristics, such as ease of machining, low level of residual particles for easy clean-up, excellent dimensional and mechanical stability, sufficient surface quality and good edge stability.

One very specific performance characteristic of modeling boards for particular applications is an intrinsic flame retardancy. This property can only be achieved in conventional polyurethane materials used as a tooling modelling board at densities of higher than 1,0 g/cm³ (e.g. RAKU® TOOL WB-1310) or by using polyisocyanurate systems known to the expert., Polyisocyanurates provide the required flame retardancy, however are very brittle and thus not suitable of being shaped by conventional means due to excess dust development. Materials other than polyurethane or polyisocyanurate which provide densities of less than 1 g/cm³ and sufficient intrinsic flame retardancy and are used for interior modelling are further described below.

Materials conventionally used for the preparation of modelling boards are e.g. epoxy resins, MDF resins, PVC foams, blown glass, honeycombs, Divinycell®, Pertinax®, vermiculite boards or abura wood. All of these materials are, however, either cost-intensive (e.g. honeycombs), do not fulfil the requirements with regard to workability (e.g. blown glass) or are not readily available (e.g. abura wood). The models are usually not produced from one piece (top down), but are put together from several boards (bottom up), so that an easy bonding of the parts, e.g. by adhesives, and easy reparability should be possible. If the materials are used for interiors, such as in (public) transportation, e.g. trains, planes or cars, strict fire regulations have to be fulfilled in addition.

Ideally, the models manufactured from modelling boards imitate wooden objects in view of their surface structure, density and feel, except that processability of the material is by far more simple, faster and cost effective as compared to wood processing.

Modelling boards usually have dimensions of 2x250x500 mm to 50x100x200 cm depending on the respective applications.

Milling, grinding or cutting of the above mentioned conventional flame retardant materials having a density < 1.0 g/cm³ is usually associated with a high dust-development. The dust generated during processing may cause serious health damages for the processors, unless elaborate safety measures, such as respiratory protection, extraction systems, etc. are involved. In particular, fine particulates having a particle diameter of less than 5 µm are suspected to be harmful. When processing material, such as modelling boards, it is desirous to form chips large enough to reduce the risk of lung intrusion and short enough to avoid clogging of adjacent air filters and/or the milling machine setup.

Surprisingly, it was found that polyurethanes according to the invention overcome the above drawbacks and provide materials at a medium weight with excellent surface and mechanical properties, which can easily be repaired and bonded by typical means and can easily be processed under formation of larger chips. Moreover, the material also fulfils the extreme fire retardancy standards that have to be fulfilled for materials used e.g. in public transportation, such as in aircrafts, busses, trains and ships. According to the invention, the flame retardancy is achieved without the use of conventional harmful flame retardants, such as halogen, antimony and phosphor-containing compounds, thereby keeping the health risks for the processor at a minimum.

The problem underlying the present invention is to provide a material, which is easily processable by standard milling, grinding or cutting processes, has a medium density, excellent surface properties, is repairable and bondable and simultaneously fulfils flame retardancy standards, which make the material suitable for use in interior applications, e.g. even in marine, railway and aircraft applications.

Thus, in a first aspect, the present invention refers to a reactive polyurethane-system comprising
(i) at least one polyol (A),
(ii) at least one polyisocyanate (B),
(iii) at least one flame retardant (FR) component and
(iv) at least one phosphorous based polyol (P).

The term *"reactive polyurethane-system"* relates to a formulation, which, when mixed together, reacts to a polyurethane (PU). Thus, components (i)-(iv) may be present separately and/or in mixtures containing at least two components.

Polyol (A) refers to a compound, which has at least two hydroxy groups, preferably at least two isocyanate-reactive hydroxy groups. The number of hydroxy groups per polyol molecule defines its functionality. In preferred embodiments, polyol (A) according to the invention has a functionality of ≥ 2, preferably 2-4 and more preferably 2-3.

In a preferred embodiment, polyol (A) is a polyether-based polyol or polyester-based polyol. The polyether-based polyol preferably has a functionality of 2-4 and is selected such that its viscosity preferably is 200-600 mPa s, more preferably 350-450 mPa s, measured at 25 °C via DIN 53019-1. The polyether-based polyol preferably has an OH number of 200-600 mg KOH/g, more preferably 350-450 mg KOH/g. The determination of the OH number is known to the skilled person. Polyether polyols preferably comprise at least two C₁₋₃-alkylene oxide repeating units, particularly ethylene oxide and propylene oxide units.

In other preferred embodiments polyol (A) is a polyester-based polyol. Such polyols may have a functionality of 2-3. The viscosity of the polyester-based polyol preferably is 500-6000 mPa s, more preferably 1000-5000 mPa·s, measured at 25 °C via DIN 53019-1. The polyester-based polyol preferably has an OH number of 200-300 mg KOH/g, more preferably 220-260 mg KOH/g. In a preferred embodiment, the polyester-based polyol derives from a thermal glycolysis of polyethylene terephthalate (PET). In the thermal glycolysis, polyethylene terephthalate raw material, e.g. used polyethylene terephthalate to be recycled, is treated at 220-250 °C at 200-1.200 mbar for 5-10 hours with glycols and optionally with dicarboxylic acids.

In a preferred embodiment, component (i) comprises a polyether-based polyol and a polyester-based polyol.

Preferably, component (i) is present in an amount of 1-40 wt.-%, more preferably 2-25 wt.-% based on the total weight of the reactive polyurethane-system.

In a preferred embodiment, the polyether-based polyol (A) is present in an amount of 1-20 wt.-%, preferably 5-15 wt.-%, more preferably 8-11 wt.-%, based on the total weight of the reactive polyurethane-system. In a preferred embodiment, the polyester-based polyol (A) is present in an amount of 3-20 wt.-%, preferably 5-15 wt.-%, more preferably 7-10 wt.-%, based on the total weight of the reactive polyurethane-system.

In a preferred embodiment, the polyether-based polyol (A) is present in an amount of 3-20 wt.-%, preferably 5-15 wt.-%, more preferably 9-10 wt.-% and the polyester-based polyol (A) is present in an amount of 3-20 wt.-%, preferably 5-15 wt.-%, more preferably 10-11 wt.-%. based on the total weight of the reactive polyurethane-system.

Component (ii) comprises at least one polyisocyanate (B). The term *"polyisocyanate"* refers to a compound, which comprises at least two isocyanate groups. Polyisocyanate (B) may be aromatic or aliphatic. Exemplary aromatic polyisocyanates are monomeric methylenedi(phenylisocyanate) (MDI) or polymeric MDI. Preferred aliphatic polyisocyanates may be methylenedi(cyclohexyl isocyanate) (HMDI), isophorone diisocyanate (IPDI) or hexamethylenedi(isocyanate) (HDI). Most preferably, polyisocyanate (B) is a polymeric MDI.

The NCO content of component (ii) preferably is 30-35%, more preferably 30-33% and even more preferably 31-33%. It may be determined via conventional methods known to the skilled person.

Polyisocyanate (B) preferably has a viscosity of 100-1000 mPa s, more preferably 300-400 mPa s, at 25 °C, when measured via DIN 53019-1. The functionality of polyisocyanate (B) preferably is 2-3, more preferably 2.5-2.9. This also applies for the overall functionality of component (ii).

In a preferred embodiment, component (ii) is present in an amount of 20-70 wt.-%, preferably 30-60 wt.-%, more preferably 40-50 wt.-%, based on the total weight of the reactive polyurethane-system.

Component (iii) comprises at least one flame-retardant (FR) component. The flame-retardant component may be an inorganic flame retardant, particularly a mineral flame retardant or expanded glass. Preferably, the flame-retardant (FR) component reacts at elevated temperatures under release of water. In preferred embodiments, the flame-retardant (FR) component is at least one metal hydroxide, preferably aluminum hydroxide, aluminum oxide hydroxide, magnesium hydroxide, magnesium oxide hydroxide or a mixture thereof.

It is preferred that the flame-retardant (FR) component has a bimodal or multimodal particle size distribution, i.e. there are two (bimodal) or multiple (multimodal) maxima in a graph illustrating the relative amount of particles over the respective particle size. A bi- or multimodal particle size distribution can for example be obtained by mixing two or more particle qualities with unimodal particle size distribution. Bimodal or multimodal particle size distribution can also be generated *in situ* during the production.

Preferably, the maximum of the lowest particle size is at 1.0-10.0µm, preferably 3.0-8.0 µm. In case of a bimodal size distribution, the maximum of the greatest particle size is at 20-60 µm, preferably 30-50 µm. In a preferred embodiment of a bimodal particle size distribution, the difference Δ between the two maxima is 30-40 µm.

In case of a multimodal particle size distribution, the difference Δ between the adjacent maxima is between 10 and 50 µm, preferably between 30 and 40 µm. The weight ratio of particles having the larger particle diameter and particles having the smaller particle diameter in a bimodal distribution is preferably at 60 - 30 : 20 - 5 In case of a multimodal particle size distribution, the weight ratio of particles having the largest particle diameter to particles having the second largest particle diameter to particles having the third largest particle diameter is preferably at 30 - 10 : 15 - 5 : 10 - 5 The weight ratio may be determined via the ratio of the relative amount of the local maximum in a graph illustrating the relative amount over the respective particle size (particle size distribution).

The bimodal or multimodal particle size distribution may be obtained by particles of the same flame-retardant (FR) component or by particles of different flame-retardant (FR) components. Preferably, the same flame-retardant (FR) component provides a bimodal or multimodal particle size distribution.

The adjustment of the particle size distribution of component (iii) has significant effects on the viscosity of the flame-retardant (FR) component and also on the viscosity of the overall reactive polyurethane-system in mixture.

In a preferred embodiment, the flame-retardant (FR) component is free of halogen, such as fluoro, chloro, bromo and iodo, antimony and red phosphor.

In a preferred embodiment, component (iii) is present in an amount of 20-60 wt.-%, more preferably 30-50 wt.-%, even more preferably 35-45 wt-%, based on the total weight of the reactive polyurethane system.

Component (iv) comprises at least one phosphorous based polyol (P). In preferred embodiments, the phosphorous based polyol is a phosphoric ester polyol, particularly an alkoxylated phosphoric ester polyol, more particularly an ethoxylated or propoxylated phosphoric ester polyol. In certain embodiments, the phosphorous based polyol (P) is free of halogens, such as fluoro, chloro, bromo and iodo. The phosphorous based polyol (P) preferably has a functionality of 2-3, more preferably 2.1-2.8. It is particularly characterized by a viscosity of 200-800 mPa s, preferably 300-400 mPa s, at 25 °C when measured via DIN 53019-1. The phosphorous based polyol (P) preferably has an OH number of 200-800 mg KOH/g, more preferably 300-600 mg KOH/g.

In a preferred embodiment, the phosphorous based polyol (P) comprises the following structure 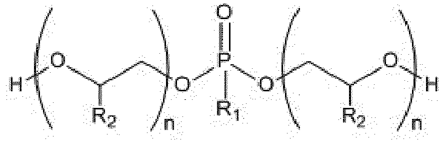 wherein
R¹ is C₁₋₆-alkyl or OH,
R² independently is H or C₁₋₆-alkyl, preferably H or methyl, and
n independently is 1-100, preferably 1-10.

In a preferred embodiment, component (iv) is present in an amount of 0.5-20 wt.-%, preferably 1-15 wt.-%, more preferably 10-15 wt.-% based on the total weight of the reactive polyurethane-system.

In another embodiment, the reactive polyurethane system according to the invention may further comprise (v) at least one additive, such as an emulsifier, a wetting agent, an additive against sedimentation, a filler, a catalyst and a foaming agent

Particularly, the filler is an inorganic filler, such as a light-weight filler, more particularly silica, glass bubbles or zeolite. The additive against sedimentation may be a modified polysiloxane, e.g. a polyether-modified polysiloxane, phosphoric acid, organically modified phosphoric acid, e.g. a phosphoric acid based polyester, whereas the intentional use of this polyester is as an additive against sedimentation. Furthermore, the anti-settle agent could also have a positive effect with respect to the overall flame-retardancy. Foam stabilizers may be non-ionic surfactants, preferred non-ionic silicon-based surfactants, more preferred polyether modified versions thereof e.g. Tegostab B 8409. Suitable emulsifiers may be substances based on phosphoric acid, preferably a mixture of phosphoric acid and phosphoric acid polyesters, such as Byk W-9010.

The catalysts, if present, accelerate the polyurethane forming reaction and are known to the skilled person. Particularly, the catalysts may be tertiary amines, such as triethylamine, N,N,N,N,N-Pentamethyldiethylenetriamine, N,N-Bis-[3(dimethyl-amino)propyl]-N',N'-dimethylpropan-1,3-diamin, 1,8-Diazabicyclo[5,4,0]-undec-7-en, N,N,N'-trimethyl-N'-hydroxyethyl-bisaminoethylether, Dimethylethanol-amin, N-Ethyl-morpholin, N-Methylimidazol, 1,3,5-Tris[3-Dimenthylamino)propyl]hexahydro-s-triazin and others. A foaming agent, if present, is preferably water.

If present, component (v) may be present in an amount of 0.05-5 wt.-%, preferably 0.10-2.0 wt.-%, more preferably 0.10 - 1.0 wt.-%, based on the total weight of the reactive polyurethane-system.

The polyurethane-system of the invention is configured such that the ratio (index) of isocyanate groups to isocyanate reactive groups, particularly OH groups, is 100-120 : 100, preferably 100-115 : 100, more preferably 105-115 : 100.

In another aspect, the present invention relates to a process for producing a polyurethane (PU) from a reactive polyurethane-system according to the invention. The process comprises the steps of
(a) homogenizing components (i), (iii), (iv) and optionally component (v),
(b) mixing the mixture obtained after step (a) with component (ii),
(c) optionally loading the mixture obtained after step (b) with gas, such as air,
(d) pouring the mixture obtained after step (b) or (c) onto a surface, preferably a mold, thereby allowing the mixture to react, optionally at elevated temperature,
(e) optionally postcuring the mixture obtained after step (d) and
(f) optionally shaping the product obtained after step (d) or (e) into the desired dimensions.

The homogenizing step (a) and the mixing step (b) are typically performed in standard dissolver, such as a Dispermat. Step (c) may be performed by introducing gas, particularly air, into the mixture obtained after step (b) via an inlet. The mixing is done on a static or dynamic mixer, known to the expert. The mixture obtained after step (b) or (c) is poured onto a surface (step (d)). Step (d) is preferably carried out at temperatures of 10-60 °C, more preferably 20-50 °C. The surface in step (d) is preferably part of a continuous line set up. That is, the surface in step (d) e.g. is a paper sheet or a metal film, such as an aluminum foil, that may continuously be moved along a conveyor belt, while the mixture obtained after step (b) or (c) is stationary dispensed onto its surface. Added foaming agents and gasses generated during the reaction cause the mixture to expand. A second top layer of a second surface, such as paper or metal foil, may be rolled on, thereby defining the dimensions of the polyurethane to be produced. In contrast to the continuous process as described above, the reaction mixture may in another embodiment be discontinuously poured into a mold. After pouring the reaction mixture into the mold, the mold is closed and opened after the foamed object is at least partially cured. The mold may be coated with a non-stick coating, such as a wax paste, pastes based on hydrocarbon C9-C10, n-Alkane, Isoalkane, Cycloalkane, water based as well as solvent-based, semi-permanent and apply-every-cycle types, silicon containing and silicon-free and others. The mold may be temperature controlled to temperatures of 20-80 °C, more preferably 30-70 °C.

The postcuring step (e) may be performed at elevated temperatures, such as 70-110 °C, for e.g. 120-1200 minutes. After the reaction is quantitatively completed, the obtained products may be shaped into the desired dimensions. For instance, the surface(s), e.g. the paper or metal foils used in the continuous process, may be removed or the products may be conditioned in the required sizes, e.g. by cutting procedures as known to the skilled person.

In another aspect, the present invention refers to a polyurethane (PU) obtainable by the process described above.

Particularly, the polyurethane is a foam, particularly an open or closed cell foam, more particularly a closed cell foam. Further, the polyurethane (PU) according to the invention may have a density of 0.2-0.9 g/cm³, preferably 0.25-0.9 g/cm³, more preferably 0.25-0.75 g/cm³. The polyurethane (PU) according to the invention particularly has a shore hardness of about 30 D to 70 D, determined according to ISO standard 868 at a density of 0.25-0.75 g/cm³. The heat distortion temperature of the polyurethane (PU) according to the invention preferably is about 55-100 °C, determined according to ISO standard 75 at a density of 0.25-0.75 g/cm³. The glass transition temperature of the polyurethane (PU) preferably is 80-110 °C, measured at a heating/cooling rate of 20 K/min at a density of 0.25-0.75 g/cm³.

The α-value of the polyurethane (PU) according to the invention preferably is 30-40*10⁻⁶/K between 40 °C and 80 °C, measured according to ISO standard 11359 at a density of 0.25-0.75 g/cm³. The bending strength of the polyurethane (PU) according to the invention preferably is 10-15 MPa, measured according to ISO standard 178 at a density of 0.25-0.75 g/cm³.

The polyurethane (PU) according to the invention preferably has an E-Modulus of 700-900 MPa, measured according to ISO standard 178 at a density of 0.25-0.75 g/cm³. The compressive strength of the polyurethane (PU) according to the invention preferably is 10-20 MPa, measured according to ISO standard 604 at a density of 0.25-0.75 g/cm³. The flammability classification of the polyurethane (PU) according to the invention fulfils the requirements of UL94 V0 2mm, determined according to UL 94 at a density of 0.25-0.75 g/cm³.

It was shown that these standards are fulfilled due to the combination of components (iii) and (iv). Moreover, the presence of the flame-retardant (FR) component allows good milling, grinding and cutting properties of the overall polyurethane after complete reaction.

In a preferred embodiment, the polyurethane (PU) according to the present invention is in the form of a cuboid, cube or board, particularly in the form of a modelling board as known to the person skilled in the art.

In one aspect, the polyurethane-system or the polyurethane (PU) according to the present invention may ideally be used as a modelling board.

In another aspect, the polyurethane system or the polyurethane (PU) according to the present invention may be used in a milling, grinding or cutting process. It was surprisingly found that such processes cause particularly reduced dust formation due to the specific composition, particularly of components (iii) and (iv). Thus, the polyurethane-system or the polyurethane (PU) according to the invention, respectively, is particularly suitable for a chip-forming milling process. Preferably, the chips formed during the chip-forming process have dimensions of 3-5 mm in length, i.e. the milling, grinding or cutting processes of the products of the invention circumvent the risk of high dust loads, particularly of particles having a particle diameter of ≤ 5 µm, which are suspected to have negative influence on the health of the processor. The milling, grinding and cutting processes of such product can thus also be performed in workshops without the need of expensive exhaust extraction systems or specific safety equipment for processors, such as respiratory protection, etc. The milling, grinding or cutting process can be performed according to the techniques known in the art, preferably with a milling tool comprising a manual milling machine and/or a vertical or horizontal mill, sandpaper, scraper, knife, saw and/or chisel, more preferably with a milling tool comprising a bed mill, a C-frame mill, a CNC mill, a horizontal boring mill, a turret mill, a sawing machine, lathes, planer, grinder or drilling machine.

In one embodiment, the present invention refers to a method for milling a polyurethane (PU) according to the invention, comprising the following steps:
i) providing a polyurethane (PU) according to the invention,
ii) treating the polyurethane with a milling tool and
iii) optionally cleaning the milled polyurethane obtained in step ii).

Step ii) is performed by a conventional milling tool, e.g. a chip-forming milling tool, as described above. Step ii) is particularly conducted by a manual milling machine and/or a vertical or horizontal mill, such as a bed mill, a C-frame mill, a CNC mill, a horizontal boring mill or a turret mill.

In another aspect, the present invention refers to a milled polyurethane obtainable by the method described above. Such milled polyurethane may be in the form of a shaped block, a shaped board, a shaped plate or a shaped film. It may be used as a building component, e.g. in a vehicle, as decorative element, in furniture, in cover panels, flooring systems, exhibition building, and many others.

The invention described above is hereinafter described in more detailed by way of an example.

### EXAMPLE

### Reactive polyurethane system

The reactive polyurethane system has the composition illustrated in Table 1.

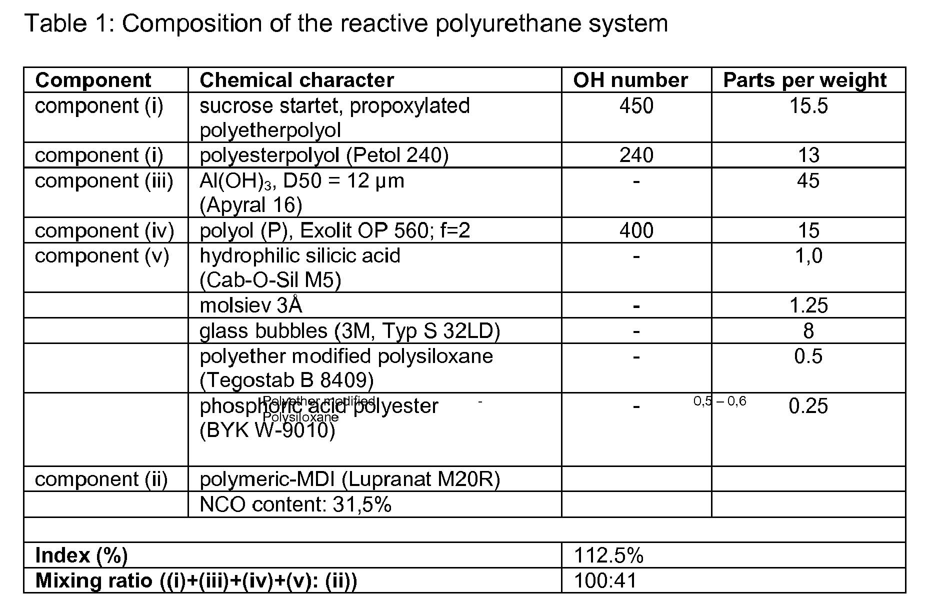

### Preparation of the polyurethane (PU)

Components (i), (iii), (iv) and (v) are mixed together using a dynamic mixer, 100 parts by weight of components (i), (iii), (iv) and (v) are mixed with component (ii) to obtain an index of 111.5%. The mixture has a temperature of about 43 °C. The reactive mixture is then poured into a mold or onto a continuous line and left for reaction. After the initial blowing reaction the curing reaction starts. The pre-cured material is then removed from the mold or cut from the continuous block. The pre-cured, raw-in-shape PU block is then transferred to further curing in an oven at elevated temperatures of at least 90°C for at least 14h. After final curing, the raw-in-shape PU-block is then transferred to the final mechanical cutting and shaping to be finalized as a board in the customer dimensions and for the intended customer use.

The polyurethane (PU) obtained in the example can be milled, cut or ground manually and/or by machine by means of a cutting tool as known to the skilled person. Common tools are e.g. sandpaper, scrapers, knifes and chisels, but also sawing machines, lathes, planers, grinders, drilling machines and milling machines which are conventionally (manually) and/or CNC controlled. The chip size in the milling process varies between 5 and 50 mm depending on the milling head. The polyurethane (PU) has a smooth surface, the pore size is 20 to 200 µm. The density of the polyurethane is 0,75 g/cm³. The flame retardant board is matching the criteria for a UL 94V0 homologation. Samples with dimensions of 12.7 x 127 x 5 mm exhibit values for the burning time after ignition, t(afterflame, first burn) = 0s, t(afterflame, second burn) = 0s and the glowing time after ignition, t(afterglow) = 0s after two times ignition for 10 s (values measured as average from five sample pieces). Samples with dimensions of 12.7 x 127 x 2 mm exhibit values for the burning time after ignition, t(afterflame, first burn) = 0s, t(afterflame, first burn) = 1,6s and the glowing time after ignition, t(afterglow) = 0s (values measured as average from five sample pieces) after two times ignition for 10 s.

Typical test values from a Cone-calorimeter ignition and burning test are summarized below.

| | Example |
|---|---|
| specimen mass [g] | 384,9 |
| specimen thickness [mm] | 50,54 |
| PHRR [kW/m²] | 139,65 |
| MARHE [kW/m²] | 89,60 |
| THR [MJ/m²] | 126,21 |
| TSR [m²/m²] | 1393,30 |
| tti [s] | 38 |
| tt PHRR [s] | 60 |
| total mass loss [%] | 17,9 |

The present invention is described by the following items.
1. Reactive polyurethane-system comprising
   (i) at least one polyol (A),
   (ii) at least one polyisocyanate (B),
   (iii) at least one flame retardant (FR) component, and
   (iv) at least one phosphorous based polyol (P).
2. Reactive polyurethane-system according to item 1, wherein the polyol (A) is a polyether-based polyol or a polyester-based polyol.
3. Reactive polyurethane-system according to item 1 or 2, wherein the polyol (A) has a functionality of ≥ 2.
4. Reactive polyurethane-system according to item 2 or 3, wherein the polyether-based polyol has a functionality of 2-4.
5. Reactive polyurethane-system according to any of items 2-4, wherein the polyether-based polyol has a viscosity of 200-600 mPa s, preferably 350-450 mPa s, at 25 °C [DIN 53019-1].
6. Reactive polyurethane-system according to any of items 2-5, wherein the polyether-based polyol has an OH number of 200-600 mg KOH/g, preferably 350-450 mg KOH/g.
7. Reactive polyurethane-system according to item 2 or 3, wherein the polyester-based polyol has a functionality of 2-3.
8. Reactive polyurethane-system according to any of items 2, 3 or 7, wherein the polyester-based polyol has a viscosity of 500-6000 mPa s, preferably 1000-5000 mPa s, at 25 °C [DIN 53019-1].
9. Reactive polyurethane-system according to any of items 2, 3, 7 or 8, wherein the polyester-based polyol has an OH number of 200-300 mg KOH/g, preferably 220-260 mg KOH/g.
10. Reactive polyurethane-system according to any of items 2, 3 or 7-9, wherein the polyester-based polyol derives from a thermal glycolysis of polyethylene terephthalate (PET).
11. Reactive polyurethane-system according to any of the preceding items, wherein the polyisocyanate (B) is selected from the group consisting of an aromatic or aliphatic polyisocyanate, particularly monomeric methylenedi(phenylisocyanate) (MDI) or polymeric MDI, methylenedi(cyclohexyl isocyanate) (HMDI), hexamethylenedi(isocyanate) (HDI) and isophorone diisocyanate (IPDI), preferably polymeric MDI.
12. Reactive polyurethane-system according to any of the preceding items, wherein the NCO content of component (ii) is 30-35 %, preferably 30-33 %, more preferably 31-33 %.
13. Reactive polyurethane-system according to any of the preceding items, wherein the polyisocyanate (B) has a viscosity of 100-1000 mPa s, preferably 300-400 mPa s, at 25 °C [DIN 53019-1].
14. Reactive polyurethane-system according to any of the preceding items, wherein the polyisocyanate (B) has a functionality of 2-3, preferably 2.5-2.9.
15. Reactive polyurethane-system according to any of the preceding items, wherein the phosphorous based polyol (P) is a phosphoric ester polyol, particularly an alkoxylated phosphoric ester polyol, more particularly an ethyoxylated or propoxylated phosphoric ester polyol.
16. Reactive polyurethane-system according to any of the preceding items, wherein the phosphorous based polyol (P) is free of halogens, such as fluoro, chloro, bromo and iodo.
17. Reactive polyurethane-system according to any of the preceding items, wherein the phosphorous based polyol (P) has a functionality of 2-3, preferably 2.1-2.8.
18. Reactive polyurethane-system according to any of the preceding items, wherein the phosphorous based polyol (P) has a viscosity of 200-800 mPa s, preferably 300-400 mPa s, at 25°C [DIN 53019-1].
19. Reactive polyurethane-system according to any of the preceding items, wherein the phosphorous based polyol (P) has an OH number of 200-800 mg KOH/g, preferably 300-600 mg KOH/g.
20. Reactive polyurethane-system according to any of the preceding items, wherein the phosphorous based polyol (P) comprises the following structure 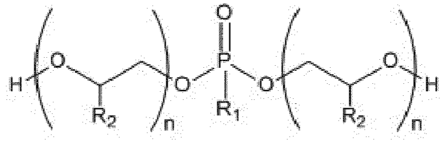 wherein
   R¹ is C₁₋₆-alkyl or OH,
   R² independently is H or C₁₋₆-alkyl, preferably H or methyl, and
   n independently is 1-100, preferably 1-10.
21. Reactive polyurethane-system according to any of the preceding items, wherein the flame retardant (FR) component is an inorganic flame retardant, particularly a mineral flame retardant or expanded glass.
22. Reactive polyurethane-system according to any of the preceding items, wherein the flame retardant (FR) component reacts at elevated temperatures under release of water.
23. Reactive polyurethane-system according to any of the preceding items, wherein the flame retardant (FR) component is at least one metal hydroxide, preferably aluminum hydroxide, aluminum oxide hydroxide, magnesium hydroxide, magnesium oxide hydroxide, or a mixture thereof.
24. Reactive polyurethane-system according to any of the preceding items, wherein the flame retardant (FR) component has a bimodal or multimodal particle size distribution.
25. Reactive polyurethane-system according to any of the preceding items, wherein the flame retardant (FR) component is free of halogen, such as fluoro, chloro, bromo and iodo, antimony and red phosphor.
26. Reactive polyurethane-system according to any of the preceding items, which further comprises
   (v) at least one additive, such as an emulsifier, a wetting agent, an additive against sedimentation, a filler, a catalyst, and a foaming agent.
27. Reactive polyurethane-system according to item 25, wherein the filler is an inorganic filler, such as a light-weight filler, particularly silica, glass bubbles or zeolite.
28. Reactive polyurethane-system according to item 26 or 27, wherein the additive against sedimentation is a modified polysiloxane, e.g. a polyether modified polysiloxane, phosphoric acid, an organically modified phosphoric acid, e.g. a phosphoric acid based polyester, or mixtures thereof.
29. Reactive polyurethane-system according to any of the preceding items, wherein component (i) is present in an amount of 3-20 wt.-%, preferably 5-10 wt.-%, based on the total weight of the reactive polyurethane-system.
30. Reactive polyurethane-system according to any of the preceding items, wherein component (ii) is present in an amount of 30-70 wt.-%, preferably 40-60 wt.-%, based on the total weight of the reactive polyurethane-system.
31. Reactive polyurethane-system according to any of the preceding items, wherein component (iii) is present in an amount of 3-15 wt.-%, preferably 5-10 wt.-%, based on the total weight of the reactive polyurethane-system.
32. Reactive polyurethane-system according to any of the preceding items, wherein component (iv) is present in an amount of 0.5-20 wt.-%, preferably 1-15 wt.-%, based on the total weight of the reactive polyurethane-system.
33. Reactive polyurethane-system according to any of the preceding items, wherein component (v) is present in an amount of 0.1-5 wt.-%, preferably 0.25-2.0 wt.-%, based on the total weight of the reactive polyurethane-system.
34. Reactive polyurethane-system according to any of the preceding items, wherein the ratio of isocyanate groups to isocyanate reactive groups, particularly OH groups, is 100-120 : 100, preferably 100-115 : 100, more preferably 105-115 : 100.
35. Process for producing a polyurethane (PU) from a reactive polyurethane-system according to any of items 1-34, comprising the steps of
   (a) homogenizing components (i), (iii), (iv) and optionally component (v),
   (b) mixing the mixture obtained after step (a) with component (ii),
   (c) optionally loading the mixture obtained after step (b) with gas, such as air,
   (d) pouring the mixture obtained after step (b) or (c) onto a surface, preferably a mold, thereby allowing the mixture to react, optionally at elevated temperature,
   (e) optionally postcuring the mixture obtained after step (d), and
   (f) optionally shaping the product obtained after step (d) or (e) into the desired dimensions.
36. Process according to item 35, wherein step (d) is carried out at temperatures of 70-130 °C.
37. Process according to item 35 or 36, wherein the surface in step (d) is part of a continuous line set up.
38. Polyurethane (PU) obtainable by a process according to any of items 35-37.
39. Polyurethane (PU) according to item 38, which is a foam, particularly an open or closed cell foam, particularly a closed cell foam.
40. Polyurethane (PU) according to item 38 or 39, which has a density of 0.2-0.9 g/cm³, preferably 0.25-0.9 g/cm³, more preferably 0.25-0.75 g/cm³.
41. Polyurethane (PU) according to any of items 38-40, which has a shore hardness of about 30 D to 70 D determined according to ISO standard 868 at a density of 0.25-0.75 g/cm³.
42. Polyurethane (PU) according to any of items 38-41, which has a heat distortion temperature of about 55-100 °C determined according to ISO standard 75 at a density of 0.25-0.75 g/cm³.
43. Polyurethane (PU) according to any of items 38-42, which has a glass transition temperature of 80-110 °C measured at a heating/cooling rate of 20 K/min at a density of 0.25-0.75 g/cm³.
44. Polyurethane (PU) according to any of items 38-43, which has an α-value of 30-40*10⁻⁶/K between 40 °C and 80 °C measured according to ISO standard 11359 at a density of 0.25-0.75 g/cm³.
45. Polyurethane (PU) according to any of items 38-44, which has a bending strength of 10-15 MPa, measured according to ISO standard 178 at a density of 0.25-0.75 g/cm³.
46. Polyurethane (PU) according to any of items 38-45, which has an E-Modulus of 700-900 MPa measured according to ISO standard 178 at a density of 0.25-0.75 g/cm³.
47. Polyurethane (PU) according to any of items 38-46, which has a compressive strength of 10-20 MPa measured according to ISO standard 604 at a density of 0.25-0.75 g/cm³.
48. Polyurethane (PU) according to any of items 38-47, which has a flammability classification of UL94 V0 2mm determined according to UL 94 at a density of 0.25-0.75 g/cm³.
49. Polyurethane (PU) according to any of items 38-48, which is in the form of a cuboid, cube or board.
50. Use of a reactive polyurethane-system according to any of items 1-34 or a polyurethane (PU) according to any of items 38-49 in a milling, grinding or cutting process.
51. Use of a reactive polyurethane-system or a polyurethane (PU) according to item 50, wherein the milling process is a chip forming process.
52. Use of a reactive polyurethane-system or a polyurethane (PU) according to item 50 or 51, wherein the chip formed in the milling process has a dimension of 3-5 mm in length.
53. Use of a reactive polyurethane-system or a polyurethane (PU) according to any of items 50-52, wherein the milling, grinding or cutting process is performed with a milling tool comprising a manual milling machine and/or a vertical or horizontal mill, sandpaper, scraper, knife, saw, and/or chisel.
54. Use of a reactive polyurethane-system or a polyurethane (PU) according to any of items 50-53, wherein the milling, cutting or grinding process is performed with a milling tool comprising a bed mill, a C-frame mill, a CNC mill, a horizontal boring mill, a turret mill, sawing machine, lathes, planer, grinder, or drilling machine.
55. Method for milling a polyurethane (PU), comprising the following steps:
   i) providing a polyurethane (PU) according to any of items 38-49,
   ii) treating the polyurethane with a milling tool, and
   iii) optionally cleaning the milled polyurethane obtained in step ii).
56. Method according to item 55, wherein step ii) is a chip forming process, particularly conducted by a manual milling machine and/or a vertical or horizontal mill, such as a bed mill, a C-frame mill, a CNC mill, a horizontal boring mill or a turret mill.
57. Milled polyurethane obtainable by a method according to item 55 or 56.
58. Milled polyurethane according to item 57, which is a shaped block, shaped board, shaped plate or shaped film.
59. Use of a milled polyurethane according to item 57 or 58 as a building component, e.g. in a vehicle, as decorative element, in furniture, in cover panels, flooring systems, exhibition buildings.

## Claims

1. Reactive polyurethane-system comprising
(i) at least one polyol (A),
(ii) at least one polyisocyanate (B),
(iii) at least one flame retardant (FR) component, and
(iv) at least one phosphorous based polyol (P).

2. Reactive polyurethane-system according to claim 1, wherein the polyol (A) is a polyether-based polyol or a polyester-based polyol.

3. Reactive polyurethane-system according to any of the preceding claims, wherein the polyisocyanate (B) is selected from the group consisting of an aromatic or aliphatic polyisocyanate, particularly monomeric methylenedi(phenylisocyanate) (MDI) or polymeric MDI, methylenedi(cyclohexyl isocyanate) (HMDI), hexamethylenedi(isocyanate) (HDI) and isophorone diisocyanate (IPDI), preferably polymeric MDI.

4. Reactive polyurethane-system according to any of the preceding claims, wherein the phosphorous based polyol (P) is a phosphoric ester polyol, particularly an alkoxylated phosphoric ester polyol, more particularly an ethyoxylated or propoxylated phosphoric ester polyol, such as the following structure 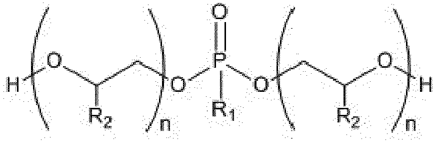 wherein
R¹ is C₁₋₆-alkyl or OH,
R² independently is H or C₁₋₆-alkyl, preferably H or methyl, and
n independently is 1-100, preferably 1-10.

5. Reactive polyurethane-system according to any of the preceding claims, wherein the flame retardant (FR) component is an inorganic flame retardant, particularly a mineral flame retardant or expanded glass, which particularly reacts at elevated temperatures under release of water.

6. Reactive polyurethane-system according to any of the preceding claims, wherein the flame retardant (FR) component has a bimodal or multimodal particle size distribution.

7. Reactive polyurethane-system according to any of the preceding claims, which further comprises
(v) at least one additive, such asan emulsifier, a wetting agent, an additive against sedimentation, a filler, a catalyst, and a foaming agent.

8. Process for producing a polyurethane (PU) from a reactive polyurethane-system according to any of claims 1-7, comprising the steps of
(a) homogenizing components (i), (iii), (iv) and optionally component (v),
(b) mixing the mixture obtained after step (a) with component (ii),
(c) optionally loading the mixture obtained after step (b) with gas, such as air,
(d) pouring the mixture obtained after step (b) or (c) onto a surface, preferably a mold, thereby allowing the mixture to react, optionally at elevated temperature,
(e) optionally postcuring the mixture obtained after step (d), and
(f) optionally shaping the product obtained after step (d) or (e) into the desired dimensions.

9. Polyurethane (PU) obtainable by a process according to claim 8.

10. Polyurethane (PU) according to claim 9, which is a foam, particularly an open or closed cell foam, particularly a closed cell foam, preferably having a density of 0.2-0.9 g/cm³, more preferably 0.25-0.75 g/cm³.

11. Use of a reactive polyurethane-system according to any of claims 1-7 or a polyurethane (PU) according to any of claims 9-10 in a milling, grinding or cutting process, particularly in a chip forming process.

12. Use of a reactive polyurethane-system or a polyurethane (PU) according to claim 11, wherein the milling, grinding or cutting process is performed with a milling tool comprising a manual milling machine and/or a vertical or horizontal mill, sandpaper, scraper, knife, saw, and/or chisel.

13. Method for milling a polyurethane (PU), comprising the following steps:
i) providing a polyurethane (PU) according to any of claims 9-10,
ii) treating the polyurethane with a milling tool, and
iii) optionally cleaning the milled polyurethane obtained in step ii).

14. Milled polyurethane obtainable by a method according to claim 13.

15. Use of a milled polyurethane according to claim 14 as a building component, e.g. in a vehicle, as decorative element, in furniture, in cover panels, flooring systems, exhibition buildings.
